# EUROPÄISCHE PATENTSCHRIFT

(11) **EP 3 433 192 B1**
(45) Veröffentlichungstag und Bekanntmachung des Hinweises auf die Patenterteilung: **15.04.2020**
(21) Anmeldenummer: 18703001.0
(22) Anmeldetag: 02.02.2018
(51) Int. Cl.: B65G 47/86

(54) **LAGERVORRICHTUNG**
BEARING DEVICE
ENSEMBLE PALIER

(30) Priorität: 09.03.2017 DE 102017105016
(43) Veröffentlichungstag der Anmeldung: 30.01.2019
(73) Patentinhaber: Tyrolon-Schulnig GmbH, 6395 Hochfilzen (AT)
(72) Erfinder: SCHULNIG, Elmar, 6391 Fieberbrunn (AT); SCHULNIG, Ludwig, 6392 St. Jakob in Haus (AT)
(74) Vertreter: Rupprecht, Kay
(86) Internationale Anmeldenummer: PCT/EP2018/052592
(87) Internationale Veröffentlichungsnummer: WO 2018/162153

(56) Entgegenhaltungen:
- EP-A1- 2 159 172
- EP-A1- 2 907 777
- DE-A1-102004 041 724
- DE-A1-102014 117 358
- DE-U1-202006 018 379
- KR-B1- 101 186 256
- US-B1- 8 672 376

## Beschreibung

Die Erfindung betrifft eine Lagervorrichtung für mindestens ein Greifarmpaar, das zum Greifen, Halten und Führen von insbesondere flaschenartigen Behältern geeignet ist.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z.B. Flaschen oder Dosen oder Gläser, die jeweils den Anforderungen entsprechend aus Glas, Metall oder Kunststoff bestehen.

Ein derartiges Greifarmpaar weist insbesondere, aber nicht ausschließlich einen ersten Greifarm und einen zweiten Greifarm auf, die durch eine Zangenbewegung einen Behälter greifen und durch eine form- und/oder kraftschlüssige Verbindung mit dem Behälter zwischen den beiden Greifarmen diesen Behälter halten, transportieren und führen können. Hierbei ist der zweite Greifarm insbesondere gegengleich zum ersten Greifarm ausgebildet. Bei der Zangenbewegung bewegt sich das Greifarmpaar von einer Öffnungsstellung in eine Greifstellung, wobei in der Öffnungsstellung ein Behälter zwischen den gespreizten Greifarmen positioniert werden kann und in der Greifstellung die Greifarme entweder einen Behälter greifen und halten oder, ohne einen zwischen den Greifarmen angeordneten Behälter, geschlossen sind und sich insbesondere berühren können. In der Getränkeindustrie ist die Verwendung derartiger Greifarmpaare, auch als Klammergreifer bezeichnet, bekannt. Hierbei ist es üblich, dass Flüssigkeiten wie beispielsweise Wasser, Säfte, Bier, etc. in Behältern, insbesondere Flaschen, zumindest im industriellen Umfang in Verarbeitungsstraßen bzw. Getränkeabfüllanlagen oder Behälterabfüll- und Transportsystemen abgefüllt und verschlossen werden. Eine Verarbeitungsstraße besteht üblicherweise aus einer Reinigungsanlage für die Behälter, einer Abfüllanlage für die Abfüllung der Flüssigkeit in die Behälter und einer Verschließanlage, die die Behälter verschließt. Die unterschiedlichen Anlagen sind mittels Zubringersystemen miteinander verbunden, die als Fließbänder, Transportsternen, etc. ausgebildet sein können.

Ein Transportstern, auch als Klammerstern bezeichnet, ist eine Vorrichtung, die um eine Achse rotieren kann und am Rand einer insbesondere kreisförmigen Trägerplatte eine Vielzahl von Klammergreifern aufweist. Die Trägerplatte ist um die Achse rotierbar, wobei die Klammergreifer einen Behälter an insbesondere zur Trägerplatte tangential verlaufenden Transportflüssen der Behälter greifen und freigeben und zwischen diesen Punkten den Behälter entlang eines Kreisbogens transportieren.

Zwar sind Greifarmpaare auf Grund der Zangenbewegung geeignet, Behälter verschiedener Größen, insbesondere Durchmesser, zu greifen; allerdings existieren Toleranzgrenzen, die durch die Länge und die Greifform der Greifarme und den maximalen Öffnungswinkel zwischen Greifarmen bedingt sind. Werden diese Grenzen überschritten, können zu kleine oder zu große Behälter, insbesondere mit einer unterschiedlichen Form, nicht mehr stabil gegriffen und gehalten werden. Daher kann es notwendig sein, bei der Anpassung einer Verarbeitungsstraße auf einen neuen Typ von Behälter die Greifarmpaare auszutauschen, welche die neuen Behälter problemlos halten können.

Ebenso unterliegen die Greifarme einer Abnutzung bzw. einem Verschleiß und somit einer statistischen Lebensdauer, die durch die mechanische Belastung bei der Bewegung von der Öffnungsstellung in die Greifstellung und umgekehrt sowie dem Halten der Behälter zu Tage tritt. Sobald die Greifarme derart abgenutzt sind, dass sie ihre Greiffunktion nicht mehr ausführen können, müssen die Greifarme ausgetauscht werden. Dies ist der Fall, wenn sich beispielsweise Greifarme aus Metall durch die Abnutzung verbogen haben oder Greifarme aus Kunststoff zumindest teilweise abgebrochen sind.

Bei den oben genannten Situationen, in denen die Greifarme ausgetauscht werden müssen, werden die Anlagen gestoppt und die entsprechenden Greifarme händisch ausgetauscht. Diese geplanten oder ungeplanten Betriebsunterbrechungen haben eine negative Auswirkung auf den Umsatz des die Transportsterne oder ähnliche mit Greifarmen ausgestatteten Anlagen betreibenden Unternehmens und sollten daher so kurz wie möglich ausfallen.

Aus der Druckschrift DE 10 2014 111 564 ist eine Lagereinheit bekannt, auf der ein Greifarmpaar angeordnet und gelagert ist. Die Lagereinheit ermöglicht einem Betreiber bzw. Unternehmen, ein Greifarmpaar im Vergleich zu anderem Stand der Technik relativ schnell auszutauschen.

Allerdings hat der Stand der Technik weiterhin zahlreiche Nachteile. So ist z.B. die oben genannte Lagereinheit relativ groß dimensioniert und nicht besonders einfach auf einen Transportstern montierbar. Des Weiteren besteht die Lagereinheit aus einer Vielzahl von einzelnen separaten Bauteilen, die eine Handhabung beim Austausch eines Greifarmpaars erschweren.

KR101186256B beschreibt eine Lagervorrichtung nach dem Oberbegriff des Anspruchs 1.

Es ist daher die Aufgabe der vorliegenden Erfindung, eine Lagervorrichtung zu konzipieren, die die aus dem Stand der Technik bekannten Nachteile behebt oder zumindest minimiert.

Diese Aufgabe wird erfindungsgemäß durch eine Lagervorrichtung nach Anspruch 1 gelöst. Danach ist eine Lagervorrichtung für mindestens ein Greifarmpaar mit einem ersten und einem zweiten, zum ersten gegengleich ausgebildeten Greifarm vorgesehen, wobei das mindestens eine Greifarmpaar zum Greifen, Halten und Führen von insbesondere flaschenartigen Behältern durch einen drehbar gelagerten Steuernocken von einer Greifstellung in eine Öffnungsstellung oder umgekehrt bewegbar ist. Zusätzlich weist die Lagervorrichtung einen ersten Lagerbolzen zum schwenkbaren Lagern des mindestens einen ersten Greifarms, einen zweiten Lagerbolzen zum schwenkbaren Lagern des mindestens einen zweiten Greifarms, eine Basisplatte mit einer Aufnahme zum schwenkbaren Lagern des Steuernockens, und eine Abstandshülse zum Aufnehmen eines Befestigungsmittels zum Befestigen der Abstandshülse auf einer Plattform auf, wobei die Lagerbolzen und die Abstandshülse an der Basisplatte befestigt sind. Diese Lagervorrichtung bzw. das Lagergerüst hat den Vorteil, dass alle Bestandteile fest miteinander verbunden sind und somit eine kompakte Vorrichtung zur Verfügung steht, die keiner zeitraubenden Zusammensetzung bedarf und auf einer Plattform schneller und leichter montierbar ist.

Zusätzlich bildet die Basisplatte eine Begrenzung für die Lagerbolzen derart, dass die eingesetzten Greifarme nicht von den Lagerbolzen heraus- bzw. heruntergleiten können. Des Weiteren können auf Grund der Basisplatte die Lagerbolzen verlängert und somit mehrere Greifarmpaare aufgenommen werden, ohne dass die Lagerbolzen bei der Zangenbewegung der Greifarmpaare verkippen oder sich verformen. Das liegt insbesondere daran, dass die Lagerbolzen im montierten Zustand an einem Ende in einer Trägerplattform und am anderen Ende in der Basisplatte eingesetzt sind und somit keine Hebelkräfte über die gesamte Länge der Bolzen, sondern nur noch auf ein Ende der Bolzen wirken können.

Ein weiterer Vorteil basiert auf der Abstandshülse, die im Wesentlichen als einziges Bauteil der Lagervorrichtung den Abstand zur Plattform bestimmt, insbesondere zwischen Basisplatte und Plattform, und beibehält. Somit ist keine mühselige Anpassung verschiedener Komponenten der Lagervorrichtung zur Bestimmung der Höhe bzw. des Abstands notwendig. Des Weiteren ist nur ein einziges Befestigungsmittel erforderlich, das die Abstandshülse und damit die Lagervorrichtung auf der Plattform befestigt. Somit werden ein Austausch des mindestens einen Greifarmpaars und die Montage der Lagervorrichtung auf der Plattform vereinfacht.

Im Folgenden werden bevorzugte Ausführungsformen der Erfindung erläutert, wie sie in den Unteransprüchen angegeben sind.

Vorteilhafterweise sind die Lagerbolzen in der Plattform lösbar einsetzbar und die Abstandshülse auf der Plattform anordbar und durch das Befestigungsmittel auf der Plattform lösbar befestigbar. Die lösbare Einsetzbarkeit sowie Befestigbarkeit erlaubt einen schnellen und unkomplizierten Austausch der Lagervorrichtung. Dabei ist die Abstandshülse insbesondere derart ausgebildet, dass sie auf der Oberfläche der Plattform nicht kippen kann. Dies ist z.B. dadurch möglich, dass das der Plattform zugewandte Hülsenende, insbesondere dessen Wanddicke, komplementär zur Befestigungsposition der Abstandshülse auf der Plattform ausgebildet ist, oder wenn das Hülsenende und die Plattform eben ausgeformt sind. Die Lagerbolzen verhindern durch deren Einsetzbarkeit, insbesondere im auf/in der Plattform eingesetzten Zustand, im Wesentlichen ein Verschwenken der Lagervorrichtung um die Achse der Abstandshülse.

Erfindungsgemäß ist die Länge der Abstandshülse kürzer als die Länge der Lagerbolzen. Dies ist insbesondere bei einer ebenen Oberfläche der Plattform von Vorteil, da dadurch die Enden der Lagerbolzen stets in entsprechenden Aufnahmen der Plattform eingesetzt sind, sobald die Abstandshülse an seiner Befestigungsposition auf der Plattform angeordnet und die Lagervorrichtung betriebsfertig bzw. befestigungsbereit ausgerichtet wurde. Somit bilden die Lagerbolzen auch eine Art von Führungsmittel beim Anordnen der Lagervorrichtung auf der Plattform.

Vorzugsweise weist die Basisplatte mindestens vier Bohrungen zum Aufnehmen des ersten und zweiten Lagerbolzens, der Abstandshülse und des Steuernockens auf. Diese vorteilhafte Ausgestaltung der Basisplatte ermöglicht eine einfache Herstellung und einen unkomplizierten Zusammenbau der Lagervorrichtung, wobei die entsprechenden Bauteile in der Basisplatte angeordnet und z.B. durch Schweißen oder Presspassung befestigt werden können. Die Bohrung für den Steuernocken ist derart ausgebildet, dass der Steuernocken ohne weiteres eingesetzt werden kann und im eingesetzten Zustand genug Spiel hat, um zu rotieren bzw. zu schwenken.

Es hat sich ebenfalls als Vorteil erwiesen, wenn die Abstandshülse derart mit der Basisplatte angeordnet oder ausgebildet ist, dass das Befestigungsmittel von einem Ende der Abstandshülse einführbar und teilweise von dem anderen Ende der Abstandshülse herausführbar ist. Damit wird die Befestigung der Lagervorrichtung weiter vereinfacht. Zusätzlich kann die Hülse lediglich derart ausgebildet sein, dass es als Führungsmittel für das Befestigungsmittel dient. Sobald das Befestigungsmittel durch die Hülse geführt, in die Plattform eingesetzt und befestigt wurde und die Hülse gegen die Plattform gedrückt wird, bildet die Hülse, insbesondere deren Ende, mit der Oberfläche der Plattform eine kraftschlüssige Verbindung.

In einer weiteren vorteilhaften Ausführungsform weist die Lagervorrichtung eine Auflageplatte als Plattform mit einer ersten und einer zweiten Aufnahme zum Einsetzen des ersten und des zweiten Lagerbolzens, einer dritten Aufnahme, auf der die Abstandshülse anordbar und in der das Befestigungsmittel lösbar befestigbar ist, sowie eine vierte Aufnahme zum schwenkbaren Lagern des Steuernockens auf. Sobald mindestens die Greifarme des mindestens einen Greifarmpaars auf den Lagerbolzen angeordnet sind, kann die Basisplatte mit den Lagerbolzen auf die Auflageplatte gesetzt und mit einem Befestigungsmittel über die Abstandshülse miteinander befestigt werden. Zusätzlich kann auch der Steuernocken vor oder nach der Zusammensetzung von Basisplatte und Auflageplatte eingesetzt werden. Jede Lagereinrichtung weist hierbei seine eigene separate Auflageplatte auf. Schlussendlich steht dem Betreiber eines Transportsterns sofort eine Einheit zur Verfügung, in der alle notwendigen Bauteile eines Klammergreifers installiert werden können und die dann im Wesentlichen betriebsbereit ist. Ein umständliches Auswählen und Zusammensetzen der Komponenten des Klammergreifers, insbesondere der Greifarme und der Lagervorrichtung, und ein Einsetzen und Montieren der Lagervorrichtung, insbesondere dessen Basisplatte, Lagerbolzen und Abstandshülse auf die Plattform, wird somit umgangen.

Vorzugsweise ist die Auflageplatte derart angepasst, auf einer Trägerplatte eines Klammersterns, insbesondere lösbar, befestigt zu werden. Beim Montieren der Lagervorrichtung aus Basisplatte, Lagerbolzen und Abstandshülse (ohne Auflageplatte) sind mindestens drei Aufnahmen notwendig; oder vier Aufnahmen, wenn eine zusätzliche Aufnahme zur Lagerung des Steuernockens dient. Die Auflageplatte kann mit nur einem oder mehreren Befestigungsmittel/n auf der Trägerplatte befestigt werden, wodurch die Montage der Lagervorrichtung auf der Trägerplatte vereinfacht und die Herstellung der Trägerplatte an sich auf Grund einer geringeren Anzahl von Bohrungen kostengünstiger werden.

Vorteilhafterweise ist ein durch die Abstandshülse geführtes Befestigungsmittel als Schraube ausgebildet, die an oder in der Plattform lösbar befestigbar ist. Die Schraube ist in eine Aufnahme mit Gewinde der Plattform hineinschraubbar und insbesondere derart dimensioniert, durch die Abstandshülse durchgeführt zu werden und gleichzeitig, im eingeschraubten Zustand, ein Verlagern der Hülse senkrecht zur Schraube zu verhindern. Der Schraubenkopf übt dabei eine Kraft auf das eine Ende der Hülse aus, wodurch es zusätzlich zu einer kraftschlüssigen Verbindung zwischen dem anderen Ende der Hülse und der Plattform kommt. Eine Schraube als Befestigungsmittel ist einfach und kostengünstig herstellbar und kann leicht eingesetzt und im Bedarfsfall gelöst werden.

Vorzugsweise sind die Lagerbolzen und die Abstandshülse parallel zueinander und senkrecht zur Basisplatte angeordnet und weisen über ihre gesamte Länge einen gleichbleibenden Durchmesser auf. Andererseits kann der Durchmesser der Lagerbolzen bei einem Längenabschnitt des Lagerbolzens auf die entsprechenden Lagerbohrungen eines Greifarms angepasst sein. Zusätzlich können die Endabschnitte einen Durchmesser oder eine Form und/oder einen Versatz zur Achse des Lagerbolzens aufweisen, die an die Bohrung der Basisplatte und/oder die Aufnahme der Plattform angepasst sind. Das bedeutet, dass der Lagerbolzen aus verschiedenen Längsabschnitten mit unterschiedlichem Durchmesser, unterschiedlichen Formen und/oder Achsen gebildet sein kann.

Die Basisplatte kann Trapez-, Rhombus-, Deltoid-, Rechteck- oder Ellipsen-förmig ausgebildet sein und weist eine Dicke zwischen 3 bis 10 mm, vorzugsweise 5 mm, auf. Diese Formen sind einfach herstellbar und die Auflageplatte kann die gleiche Form wie die Basisplatte haben.

Die einzelnen Komponenten der Lagervorrichtung können je nach individuellen mechanischen Belastungsanforderungen und Material- und Herstellungskosten entweder aus Metall oder Kunststoff bestehen.

Die Erfindung wird nachfolgend anhand von Ausführungsbeispielen mit weiteren Einzelheiten unter Bezug auf die beigefügten schematischen Zeichnungen näher erläutert.

In diesen zeigen
- Fig. 1: eine perspektivische Ansicht einer Lagervorrichtung gemäß der vorliegenden Erfindung;
- Fig. 2: eine perspektivische Ansicht einer Lagervorrichtung aus Fig. 1, die zwei Greifarmpaare lagert und auf einer Trägerplatte eines Transportsterns befestigt ist;
- Fig. 3: einen Querschnitt der Lagervorrichtung aus Fig. 2;
- Fig. 4: eine perspektive Ansicht einer Lagervorrichtung aus Fig. 1, die ein Greifarmpaar lagert und auf einer Trägerplatte eines Transportsterns befestigt ist;
- Fig. 5: eine Draufsicht auf die Lagervorrichtung aus Fig. 4 in der Greifstellung; und
- Fig. 6: eine Draufsicht auf die Lagervorrichtung aus Fig. 4 in der Öffnungsstellung.

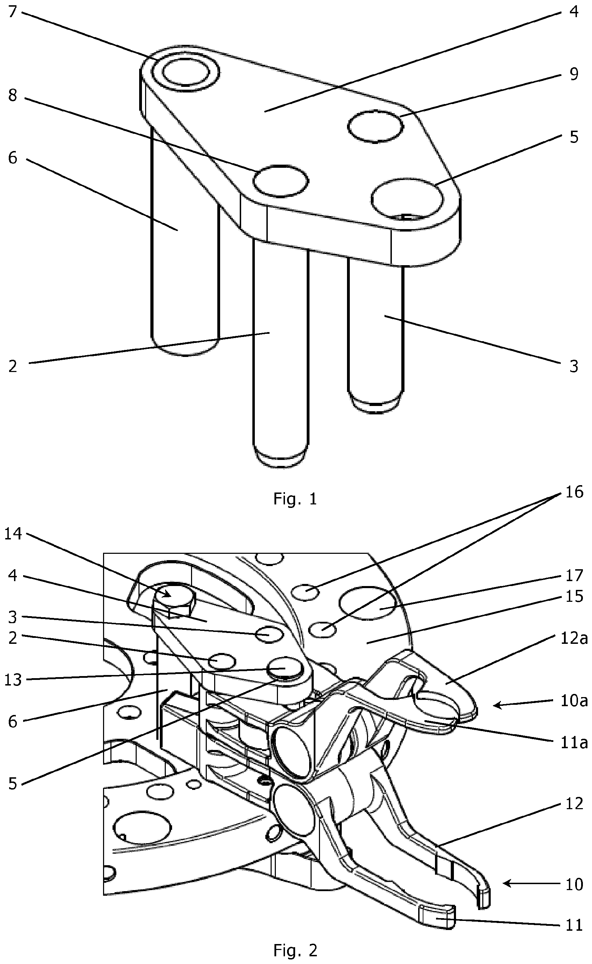

Die in Fig. 1 dargestellte Lagervorrichtung wird im Wesentlichen durch eine Basisplatte 4, einen ersten und zweiten Lagerbolzen 2, 3 und eine Abstandshülse 6 gebildet. Die Abstandshülse 4 und die Lagerbolzen 2, 3 sind in entsprechend ausgebildeten Bohrungen 7, 8, 9 der Basisplatte 4 eingesetzt und durch ein Laserschweißverfahren befestigt worden. Die Enden der Abstandshülse 4 und der Lagerbolzen 2, 3 sind eben und bündig bzw. fluchtend zu der Oberfläche der Basisplatte 4 angeordnet. Das andere Ende der Abstandshülse 4 ist ebenfalls eben. Die anderen Enden der Lagerbolzen 2, 3 sind auch flach; allerdings wurde deren Rand angefast, d.h. eine Fase wurde an der Bolzenkante erstellt, um die Lagerbolzen 2, 3 leichter in entsprechende Aufnahmen einer Plattform einführen zu können. Zusätzlich ist eine Bohrung 5 als Aufnahme und Lagerung für einen Steuernocken in der Drachenviereck- bzw. Deltoid-förmigen Basisplatte 4, diagonal zur Bohrung 7 liegend, ausgebildet. Gedachte Verbindungslinien zwischen den Mittelpunkten der Bohrung 7 für die Abstandshülse 4 und der Bohrung 5 für den Steuernocken sowie zwischen den Mittelpunkten den Bohrungen 8 und 9 für die Lagerbolzen 2 und 3 verlaufen senkrecht. Die Deltoidförmige Basisplatte 4 ist an ihren Ecken abgerundet, um eine benutzerfreundliche Handhabung der Lagervorrichtung zu ermöglichen. Der Abstand der Lagerbolzenbohrungen 8, 9 ist in erster Linie von der zu verwendenden Plattform und den zugehörigen Lagerbolzenaufnahmen der Plattform, in die die Lagerbolzen eingesetzt werden, abhängig.

In der Fig. 2 ist die Lagervorrichtung aus Fig. 1 mit zwei Greifarmpaaren 10 und 10a und einem Steuernocken 13 ausgestattet und mit einem Befestigungsmittel 14 in Form einer Schraube auf einer Trägerplatte 15 als Plattform befestigt. Die Trägerplatte 15 weist eine Vielzahl von Lagerbolzenaufnahmen 16, Steuernockenaufnahmen 17 und Aufnahmen mit Gewinde (nicht sichtbar) für die Schrauben 14 auf, die konzentrisch um einen Achsmittelpunkt (nicht sichtbar) der Trägerplatte 15 am Rand der Trägerplatte 15 ausgebildet sind. Die Schraube 14 ist in der Abstandshülse 6 der Lagervorrichtung angeordnet und in die entsprechenden Aufnahme der Trägerplatte hineingeschraubt. Auf Grund des Schraubenkopfs der Schraube 14 wird die Abstandshülse 6 auf die Oberfläche der Trägerplatte 15 gedrückt. Der Steuernocken 13 ist drehbar lagernd in der Steuernockenaufnahme 17 befestigt und zwischen den ersten Greifarmen 11, 11a und den zweiten Greifarmen 12, 12a angeordnet. Da die Greifarme 11, 11a, 12, 12a in Wirkverbindung mit dem Steuernocken 13 stehen, wird eine nicht zu vernachlässigende Hebelkraft auf den Steuernocken 13 ausgeübt. Um eine derartige mechanische Belastung des Steuernockens 13 im Bereich der Steuernockenaufnahme 17 zu minimieren, ist das obere Ende des Steuernockens 13 in einer Bohrung 5 der Basisplatte 4 drehbar lagernd angeordnet. Mittels der Schraube 14, welche durch die Basisplatte 4 und die Abstandshülse 6 verläuft, wird die gesamte Lagervorrichtung auf der Trägerplatte 15 fest gehalten. Auf dem ersten Lagerbolzen 2 der Lagervorrichtung sind die ersten Greifarme 11 und 11a des ersten und zweiten Greifarmpaars 10 und 10a drehbar lagernd angeordnet und auf dem zweiten Lagerbolzen 3 der Lagervorrichtung die zweiten Greifarme 12 und 12a des ersten und zweiten Greifarmpaars 10 und 10a. Die Greifarmpaare 10 und 10a sind in der Greifstellung bzw. Schließstellung, da der Steuernocken 13 als Öffnungsmittel in der gezeigten Stellung die ersten und zweiten Greifarme 11, 11a, 12, 12a der Greifarmpaare 10, 10a nicht spreizt und die ersten und die zweiten Greifarme 11, 11a, 12, 12a durch sich anziehende, innerhalb der Greifarme angeordnete Magnete als Schließmittel (nicht sichtbar) automatisch angezogen werden. An diesem Punkt wird darauf hingewiesen, dass in einer anderen Ausführungsform die Bohrung 5 für den Steuernocken auch zwischen den Lagerbolzenbohrungen 8 und 9 und der Abstandshülsenbohrung 7 ausgebildet sein kann. Die Steuernockenaufnahme 17 wäre auf der Trägerplatte 15 entsprechend verlagert. Dadurch kann der Steuernocken hinter den Achsen der Lagerbolzen 2, 3 angeordnet und drehbar gelagert werden und als Schließmittel für die Greifarmpaare 10, 10a dienen.

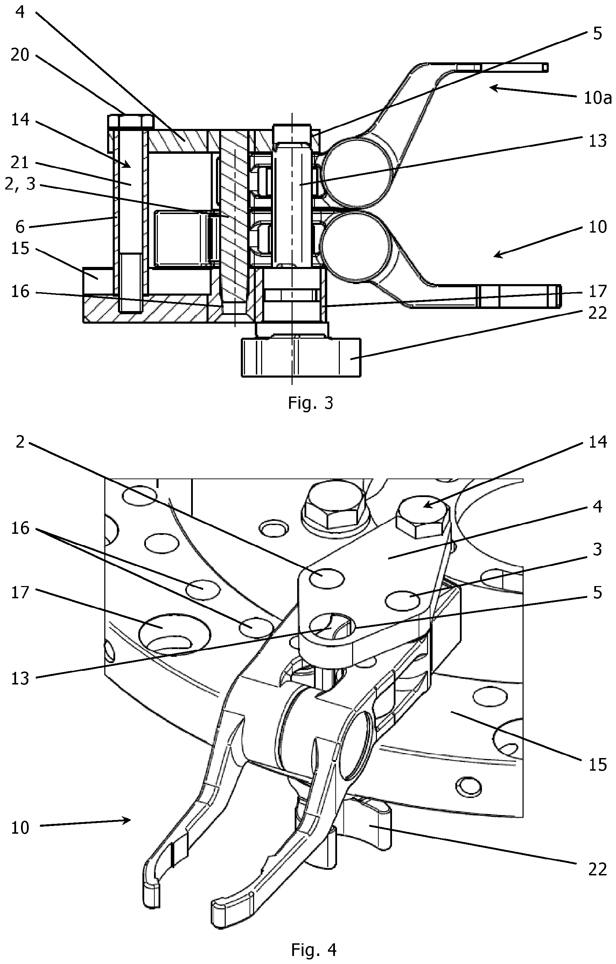

In der Querschnittsansicht in Fig. 3 sind die auf der Trägerplatte 15 befestigte Lagervorrichtung aus Fig. 2, der Steuernocken 13, die beiden Greifarmpaare 10, 10a und die Schraube 14 dargestellt. Die Querschnittslinie verläuft nicht vollständig diagonal in der Basisplatte 4 bzw. auf der Linie zwischen den Mittelpunkten der Steuernockenbohrung 5 und der Abstandshülse 6, sondern verläuft zusätzlich versetzt durch einen Lagerbolzen 2 oder 3. Die Schraube 14 wird durch einen Schraubenkopf 20 und ein anschließendes Schraubengewinde 21 gebildet. Der Steuernocken 13 weist an der unteren Seite eine Betätigungs-/Fangklaue 22 auf, durch die der Steuernocken gedreht und somit die Greifarmpaare 10, 10a geöffnet werden können. Zusätzlich sind die verschiedenen Aufnahmen 16 und 17 in Form von Bohrungen in der Trägerplatte 15 für den Lagerbolzen 2, 3 und den Steuernocken 13 sichtbar. Die Achsen der Abstandshülse 6 (und somit der Schraube 14), der Lagerbolzen 2, 3 und des Steuernocken 13 verlaufen parallel zueinander.

In der Fig. 4 wird eine Ausführungsform der Lagervorrichtung dargestellt, die der aus Fig. 2 ähnlich ist. Der einzige Unterschied liegt darin, dass die Lagervorrichtung nur ein Greifarmpaar 10 lagert und dem entsprechend zumindest eine kürzere Abstandshülse (nicht sichtbar) aufweist. Die Lagerbolzen 2, 3 können entsprechend auch verkürzt sein.

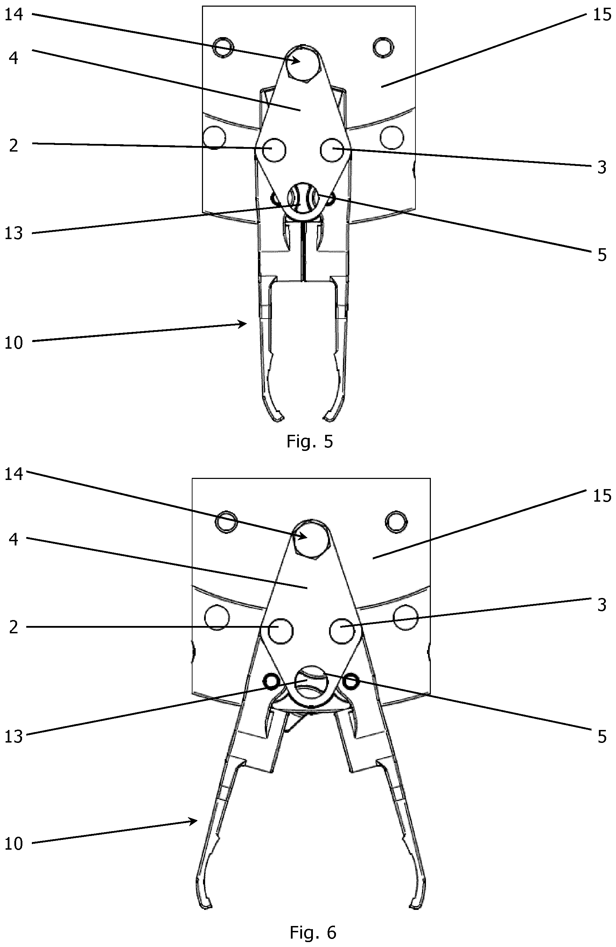

Die Fig. 5 und 6 zeigen jeweils eine Draufsicht auf die Lagervorrichtung aus Fig. 4, einmal in der Greifstellung und einmal in der Öffnungsstellung. Hierbei ist insbesondere die Interaktion des Steuernockens 13 mit einem Greifarmpaar 10 erkennbar.

### Bezugszeichenliste

- 2: erster Lagerbolzen
- 3: zweiter Lagerbolzen
- 4: Basisplatte
- 5: Aufnahme/Bohrung
- 6: Abstandshülse
- 7: Bohrung (für Abstandshülse)
- 8: Bohrung (für ersten Lagerbolzen)
- 9: Bohrung (für zweiten Lagerbolzen)
- 10: Greifarmpaar
- 10a: zweites Greifarmpaar
- 11: erster Greifarm
- 11a: erster Greifarm (des 2. Paars)
- 12: zweiter Greifarm
- 12a: zweiter Greifarm (des 2. Paars)
- 13: Steuernocken
- 14: Befestigungsmittel
- 15: Trägerplatte (als Plattform)
- 16: Lagerbolzenaufnahme
- 17: Steuernockenaufnahme
- 20: Schraubenkopf
- 21: Schraubengewinde
- 22: Betätigungs-/Fangklaue

## Patentansprüche

1. Lagervorrichtung für mindestens ein Greifarmpaar (10) mit einem ersten und einem zweiten, zum ersten gegengleich ausgebildeten Greifarm (11, 12), dass das mindestens eine Greifarmpaar (10) zum Greifen, Halten und Führen von insbesondere flaschenartigen Behältern durch einen drehbar gelagerten Steuernocken (13) von einer Greifstellung in eine Öffnungsstellung oder umgekehrt bewegbar ist, wobei
die Lagervorrichtung ausgestattet ist mit:
einem ersten Lagerbolzen (2) zum schwenkbaren Lagern des mindestens einen ersten Greifarms (11),
einem zweiten Lagerbolzen (3) zum schwenkbaren Lagern des mindestens einen zweiten Greifarms (12), und
einer Basisplatte (4) mit einer Aufnahme (5) zum schwenkbaren Lagern des Steuernockens (13),
**gekennzeichnet durch**
eine Abstandshülse (6) zum Aufnehmen eines Befestigungsmittels (14) zum Befestigen der Abstandshülse (6) auf einer Plattform, wobei die Lagerbolzen (2, 3) und die Abstandshülse (6) an der Basisplatte (4) befestigt sind, und wobei die Länge der Abstandshülse (6) kürzer als die Länge der Lagerbolzen (2, 3) ist.

2. Lagervorrichtung nach Anspruch 1,
**dadurch gekennzeichnet, dass**
die Lagerbolzen (2, 3) in der Plattform lösbar einsetzbar sind und die Abstandshülse (6) auf der Plattform anordbar und durch das Befestigungsmittel (14) auf der Plattform lösbar befestigbar ist.

3. Lagervorrichtung nach Anspruch 1 oder 2,
**dadurch gekennzeichnet, dass**
die Basisplatte (4) mindestens vier Bohrungen (5, 7, 8, 9) zum Aufnehmen des ersten und zweiten Lagerbolzens (2, 3), der Abstandshülse (6) und des Steuernockens (13) aufweist.

4. Lagervorrichtung nach einem der Ansprüche 1 bis 3,
**dadurch gekennzeichnet, dass**
die Abstandshülse (6) derart mit der Basisplatte (4) angeordnet oder ausgebildet ist, dass das Befestigungsmittel (14) von einem Ende der Abstandshülse (6) einführbar und teilweise von dem anderen Ende der Abstandshülse (6) herausführbar ist.

5. Lagervorrichtung nach einem der Ansprüche 1 bis 4,
**gekennzeichnet durch**
eine Auflageplatte als Plattform mit einer ersten und zweiten Aufnahme zum Einsetzen des ersten und zweiten Lagerbolzens (2, 3), einer dritten Aufnahme, auf der die Abstandshülse (6) anordbar und in der das Befestigungsmittel (14) lösbar befestigbar ist, sowie eine vierte Aufnahme zum schwenkbaren Lagern des Steuernockens (13).

6. Lagervorrichtung nach Anspruch 5,
**dadurch gekennzeichnet, dass**
die Auflageplatte derart angepasst ist, auf einer Trägerplatte (15) eines Klammersterns befestigt zu werden.

7. Lagervorrichtung nach einem der Ansprüche 1 bis 6,
**gekennzeichnet durch**,
ein durch die Abstandshülse geführtes Befestigungsmittel (14) in Form einer Schraube, die an der Plattform lösbar befestigbar ist.

## Claims

1. A bearing device for at least one gripper arm pair (10) having a first and a second gripper arm (11, 12), the second gripper arm being of mirror-inverted configuration to the first, with the at least one gripper arm pair (10) for gripping, holding and guiding in particular bottle-like containers being movable from a gripping position into an open position or vice versa by means of a rotatably mounted control cam (13),
wherein the bearing device is equipped with:
a first bearing pin (2) for pivotably supporting the at least one first gripper arm (11),
a second bearing pin (3) for pivotably supporting the at least one second gripper arm (12), and
a base plate (4) having a seating (5) for pivotably supporting the control cam (13),
**characterized by**
a spacer sleeve (6) for receiving a fixing means (14) for fixing the spacer sleeve (6) on a platform, wherein the bearing pins (2, 3) and the spacer sleeve (6) are fixed to the base plate (4), and wherein the length of the spacer sleeve (6) is shorter than the length of the bearing pin (2, 3).

2. The bearing device according to claim 1,
**characterized in that**
the bearing pins (2, 3) are removably inserted into the platform and the spacer sleeve (6) is arrangeable on the platform and releasably attached to the platform by the fixing means (14).

3. The bearing device according to one of claims 1 or 2,
**characterized in that**
the base plate (4) exhibits at least four drill holes (5, 7, 8, 9) for receiving the first and second bearing pin (2, 3), the spacer sleeve (6) and the control cam (13).

4. The bearing device according to one of claims 1 to 3,
**characterized in that**
the spacer sleeve (6) is arranged with the base plate (4) or configured such that the fixing means (14) can be introduced from one end of the spacer sleeve (6) and can partially lead out from the other end of the spacer sleeve (6).

5. The bearing device according to one of claims 1 to 4,
**characterized by**
a bearing plate as a platform comprising a first and a second seating for the inserting of the first and second bearing pin (2, 3), a third seating on which the spacer sleeve (6) can be arranged and in which the fixing means (14) is releasably securable, as well as a fourth seating for pivotably supporting the control cam (13).

6. The bearing device according to claim 5,
**characterized in that**
the bearing plate is adapted so as to be fixed to a support plate (15) of a clamping star.

7. The bearing device according to one of claims 1 to 6,
**characterized by**
a fixing means (14) guided through the spacer sleeve in the form of a screw which is releasably securable to the platform.

## Revendications

1. Dispositif de montage pour au moins une paire de bras de préhension (10) comportant un premier et un second bras de préhension (11, 12), le second bras de préhension étant réalisé de façon identique et opposé au premier, ladite au moins une paire de bras de préhension (10) étant mobile depuis une position de préhension jusque dans une position d'ouverture ou inversement, en vue de saisir, retenir et guider des récipients en particulier en forme de bouteilles, au moyen d'une came de commande (13) montée mobile en rotation,
le dispositif de montage étant équipé de :
un premier goujon de montage (2) pour le montage mobile en basculement dudit au moins un premier bras de préhension (11),
un second goujon de montage (3) pour le montage mobile en basculement dudit au moins un second bras de préhension (12), et
une plaque de base (4) pourvue d'un logement (5) pour le montage mobile en basculement de la came de commande (13),
**caractérisé par**
une douille d'espacement (6) pour recevoir le moyen de fixation (14) pour fixer la douille d'espacement (6) sur une plate-forme,
les goujons de montage (2, 3) et la douille d'espacement (6) étant fixés à la plaque de base (4) et la longueur de la douille d'espacement (6) étant plus courte que la longueur des goujons de montage (2, 3).

2. Dispositif de montage selon la revendication 1,
**caractérisé en ce que**
les goujons de montage (2, 3) peuvent être insérés de façon amovible dans la plate-forme, et la douille d'espacement (6) peut être agencée sur la plate-forme et être fixée de façon amovible sur la plate-forme par le moyen de fixation (14).

3. Dispositif de montage selon la revendication 1 ou 2,
**caractérisé en ce que**
la plaque de base (4) présente au moins quatre perçages (5, 7, 8, 9) pour recevoir le premier et le second goujon de montage (2, 3), la douille d'espacement (6) et la came de commande (13).

4. Dispositif de montage selon l'une des revendications 1 à 3,
**caractérisé en ce que**
la douille d'espacement (6) est agencée ou réalisée avec la plaque de base (4) de telle sorte que le moyen de fixation (14) peut être introduit depuis une extrémité de la douille d'espacement (6) et être sorti depuis l'autre extrémité de la douille d'espacement (6).

5. Dispositif de montage selon l'une des revendications 1 à 4,
**caractérisé par**
une plaque d'appui à titre de plate-forme ayant un premier et un second logement pour mettre en place le premier et le second goujon de montage (2, 3), un troisième logement sur lequel peut être agencée la douille d'espacement (6) et dans lequel peut être fixé de façon amovible le moyen de fixation (14), ainsi qu'un quatrième logement pour le montage mobile en basculement de la came de commande (13).

6. Dispositif de montage selon la revendication 5,
**caractérisé en ce que**
la plaque d'appui est adaptée de manière à être fixée sur une plaque de support (15) d'une étoile à pinces.

7. Dispositif de montage selon l'une des revendications 1 à 6,
**caractérisé par**
un moyen de fixation (14) sous la forme d'une vis menée à travers la douille d'espacement et pouvant être fixée de façon amovible à la plate-forme.
